(19) Europäisches Patentamt
European Patent Office
Office européen des brevets

(11) **EP 2 934 003 A1**

(12) **EUROPEAN PATENT APPLICATION**

(43) Date of publication:
**21.10.2015 Bulletin 2015/43**

(51) Int Cl.:
***H04N 7/173*** *(2011.01)*

(21) Application number: **15167067.6**

(22) Date of filing: **30.12.2003**

(84) Designated Contracting States:
**AT BE BG CH CY CZ DE DK EE ES FI FR GB GR HU IE IT LI LU MC NL PT RO SE SI SK TR**

(30) Priority: **20.08.2003 KR 20030057531**

(62) Document number(s) of the earlier application(s) in accordance with Art. 76 EPC:
**03781075.1 / 1 661 400**

(71) Applicant: **Electronics and Telecommunications Research Institute Daejeon 305-350 (KR)**

(72) Inventors:
• **Jeong, Young-Ho**
  **305-742 Daejon (KR)**
• **Lee, Hyun**
  **305-345 Daejon (KR)**
• **Lee, Bong-Ho**
  **305-755 Daejon (KR)**
• **Park, So-Ra**
  **305-755 Daejon (KR)**
• **Hahm, Young-Kwon**
  **305-755 Daejon (KR)**
• **Lee, Soo-In**
  **306-778 Daejon (KR)**

(74) Representative: **Betten & Resch Patent- und Rechtsanwälte PartGmbB Theatinerstraße 8 (Fünf Höfe) 80333 München (DE)**

Remarks:
This application was filed on 11-05-2015 as a divisional application to the application mentioned under INID code 62.

(54) **SYSTEM AND METHOD FOR DIGITAL MULTIMEDIA BROADCASTING**

(57) Provided is a digital multimedia broadcasting (DMB) system that can provide a multimedia data broadcasting service having an excellent reception quality, a method thereof, and a computer-readable recording medium for recording a program that implements the method. The DMB system includes an encoding unit for encoding an inputted audio/video signal; a synchronizing unit for synchronizing media stream, additional data, interactive service objectifying data that are outputted from the encoding unit; a multiplexing unit for multiplexing the media stream outputted from the synchronizing unit; an error correction encoding unit for performing additional error correction encoding on the media stream outputted from the multiplexing unit; an interleaving unit for removing temporal correlation between adjacent byte units within a data stream outputted from the error correction encoding unit; and a transmitting unit for transmitting a DMB media stream outputted from the interleaving unit to the conventional DAB system and other digital broadcasting systems.

FIG. 3A

**Description**

Technical Field

The present invention relates to a digital multimedia broadcasting (DMB) system for transmitting mobile television (TV) contents, e.g., video and video-related multimedia data, based on a digital audio broadcasting (DAB) system and other diverse digital broadcasting systems, a method thereof, and a computer-readable recording medium for recording a program that implements the method.

Background Art

A conventional digital audio broadcasting (DAB) and other diverse digital broadcasting systems define only basic mechanism such as stream mode and packet mode based on the presence of a synchronization signal within a stream to transmit a data stream. They simply define only a transmission format of data stream but they do not include any specific method for effective and stable transmission of video and multimedia data. Also, most of them apply only a single error correction code to overcome system performance degradation caused by multi-path fading and the Doppler effect in a mobile radio channel environment. This is because they are designed in consideration of a performance target value of audio or a low quality data service only. For example, in case of DAB, a target Bit Error Rate (BER) is $1 \times 10^{-4}$ (BER = $1 \times 10^{-4}$) . However, in order to satisfy a stable mobile reception quality of video and multimedia data, the target BER should be at least $10^{-8}$ and it is very hard to obtain the BER value in the conventional DAB system and other digital broadcasting systems designed only for audio service.

Therefore, required necessarily is a new DMB transmission scheme for transmitting high quality multimedia data, which is compatible with the transmission standard of the DAB and other diverse digital broadcasting systems.

Meanwhile, the DAB will be described more in detail by taking an example of the Eureka 147 DAB system, which is a DAB system of the Europe.

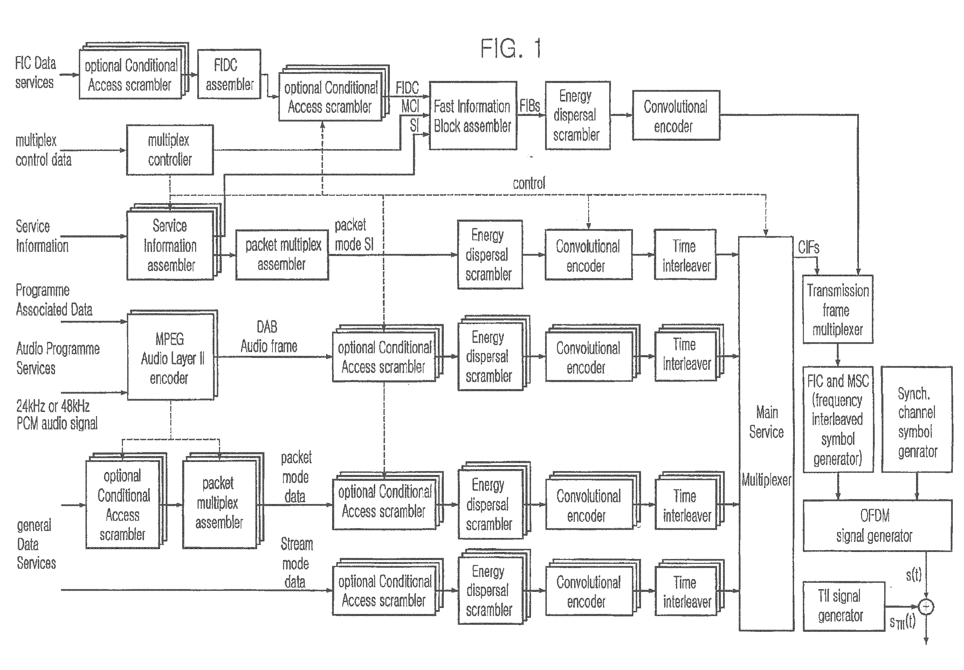

Fig. 1 is an exemplary diagram showing a conventional Eureka 147 DAB system.

Since the latter half of 1980's, European countries have actively undertaken research on DAB transmission scheme that can provide a high-quality audio service in mobile reception by organizing the Eureka 147 joint project. Since 1992, a Coded-Orthogonal Frequency Division Multiplexing (COFDM), which is a multi-carrier modulation scheme strong at multi-path fading, and a Moving Picture Experts Group (MPEG)-1/-2 Layer II, which is a signal compression method for transmitting a high-quality audio program, have been embodied and tested for their performance. By the early 1995, a DAB transmission scheme of a European single standard was developed.

In the DAB system having a transmission scheme as shown in Fig. 1, audio data stream encoded by using the MPEG encoder or ordinary data stream passes through an energy dispersal scrambler to disperse the energy of the radio frequency (RF) transmission signal and then it is encoded by using convolutional encoder at a different encoding rate based on Unequal Error Protection (UEP) or Equal Error Protection (EEP) profile. Then, sub-channel data which are time-interleaved with respect to 16 logical frame sections are multiplexed in the Main Service Multiplexer (MSM) to thereby form Common Interleaved Frame (CIF). Herein, since each logical frame includes information of a 24 ms section in a time domain, the total depth of interleaving is 384 ms. In order to form a 24ms-based DAB transmission frame, a synchronous channel, a Fast Information Channel (FIC), and a Main Service Channel (MSC) for effective data transmission are created and Quadrature Phase Shift Keying (QPSK) symbol mapping is performed. Then, frequency interleaving is applied in order to minimize the influence on the frequency selective fading.

Subsequently, a phase reference signal is generated and placed in the second symbol of the transmission frame and differential modulation is performed on the Orthogonal Frequency Division Multiplexing (OFDM) symbol that forms the FIC and MSC based on the phase reference signal. Each OFDM symbol that forms a transmission frame goes through zero-padding for 2N Inverse Fast Fourier Transform (IFFT) and then it is converted into a time domain signal through the IFFT.

In the meantime, data corresponding to a fourth of the rear of an effective symbol section are inserted to the front of the effective symbol and transmitted in order to remove Inter-Symbol Interference (ISI). This is called guard interval.

At present, most of the European countries, Canada, Singapore, and China are in service or in preparation of regular DAB broadcasting and Korea, too, selected the Eureka 147 DAB transmission scheme as transmission standard for digital audio broadcasting in the late 2002.

However, in case of the DAB, since a DAB transmission scheme for providing an effective and stable high-quality multimedia data service in a mobile channel is not developed both in Korea and other countries, it is required to develop a new DMB transmission scheme.

Disclosure of Invention

It is, therefore, an object of the present invention to provide a digital multimedia broadcasting (DMB) system that can provide multimedia data broadcasting service with a high reception quality in a mobile environment by applying highly efficient compression and objectification of multimedia data, synchronization and multiplexing between media streams, additional error correction method and interleaving in order to secure stable reception quality of multimedia data in a mobile channel environment and embody efficient and interactive multimedia data broadcasting by using a conventional digital audio broadcasting (DAB) system and other diverse digital broadcasting systems; a method thereof; and a computer-readable recording medium for recording a program that implements the method.

It is another object of the present invention to provide a DMB system that can embody DMB without changing the conventional DAB and other digital broadcasting systems by operating in a perfect compatibility with the conventional digital broadcasting system, because it is designed in consideration of the conventional DAB system and other diverse digital broadcasting systems; a method thereof; and a computer-readable recording medium for recording a program that implements the method.

In accordance with one aspect of the present invention, there is provided a DMB system, which includes: an encoding unit for encoding an inputted audio/video signal; a synchronizing unit for synchronizing media stream, additional data, interactive service objectifying data that are outputted from the encoding unit; a multiplexing unit for multiplexing the media stream outputted from the synchronizing unit; an error correction encoding unit for performing additional error correction encoding on the media stream outputted from the multiplexing unit; an interleaving unit for removing temporal correlation between adjacent byte units within a data stream outputted from the error correction encoding unit; and a transmitting unit for transmitting a DMB media stream outputted from the interleaving unit.

In accordance with one aspect of the present invention, there is provided a digital DMB method, which includes the steps of: a) encoding video/audio data at a high efficiency for data compression; b) synchronizing a media stream encoded in the step a), a media stream for an additional data service, and a objectified media stream for an interactive service; c) multiplexing a media stream synchronized in the step b); d) encoding and interleaving for correcting an error to be occurred in a media stream multiplexed in the step c); and e) transmitting a stream interleaved in the step d).

In accordance with one aspect of the present invention, there is provided a computer-readable recording medium for recording a program that implement a digital DMB method, which includes the steps of: a) encoding video/audio data at a high efficiency for data compression; b) synchronizing a media stream encoded in the step a), a media stream for an additional data service, and an objectified media stream for an interactive service; c) multiplexing a media stream synchronized in the step b); d) encoding and interleaving for correcting an error to be occurred in a media stream multiplexed in the step c); and e) transmitting a stream interleaved in the step d).

Meanwhile, the DMB system of the present invention includes a broadcasting field where multimedia data are transmitted by using conventional DAB and digital broadcasting systems, a field of source encoding technology where multimedia data are compressed, a field of multiplexing technology where multimedia data streams are mixed, and a field of error correction encoding technology where robustness to error generated in a mobile channel is given.

Brief Description of Drawings

The above and other objects and features of the present invention will become apparent from the following description of the preferred embodiments given in conjunction with the accompanying drawings, in which:

Fig. 1 is an exemplary diagram showing a conventional Eureka 147 digital audio broadcasting (DAB) system;
Figs. 2A and 2B are diagrams describing a transmission method of a digital multimedia broadcasting (DMB) system in accordance with an embodiment of the present invention;
Figs. 3A and 3B are block diagrams illustrating a DMB system in accordance with an embodiment of the present invention;
Fig. 4 is a block diagram showing a media processor of the DMB system in accordance with an embodiment of the present invention;
Figs. 5A and 5B are diagrams describing a Reed-Solomon (RS) encoder of the DMB system in accordance with an embodiment of the present invention;
Fig. 6 is a schematic diagram describing an interleaver of the DMB system in accordance with an embodiment of the present invention;
Fig. 7 is a block diagram describing an apparatus for cooperating the DMB system and the conventional DAB system in accordance with an embodiment of the present invention;
Fig. 8 is a block diagram describing an apparatus for cooperating the DMB system and the conventional DAB system in accordance with another embodiment of the present invention;
Fig. 9 is a flowchart describing an Ensemble Transport Interface (ETI) frame forming method in accordance with an embodiment of the present invention; and

Fig. 10 is a block diagram illustrating an apparatus for cooperating the DMB system and the conventional DAB system in accordance with yet another embodiment of the present invention.

Best Mode for Carrying Out the Invention

Other objects and aspects of the invention will become apparent from the following description of the embodiments with reference to the accompanying drawings, which is set forth hereinafter.

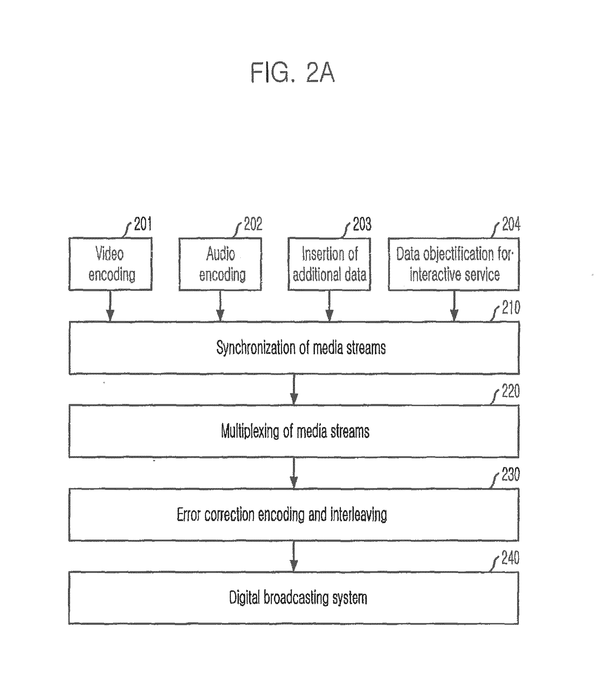

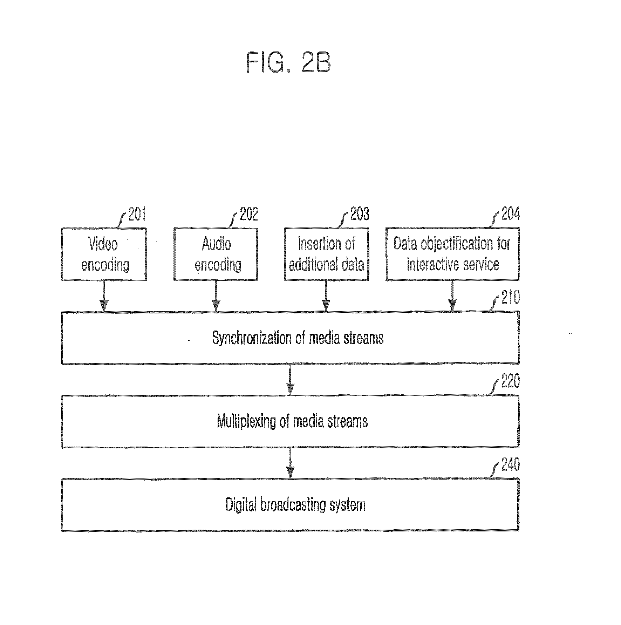

Figs. 2A and 2B are diagrams describing a transmission method of a digital multimedia broadcasting (DMB) system in accordance with an embodiment of the present invention.

As shown in Fig. 2A, the DMB system of the present invention includes a process of high-efficiency video encoding at step 201 for compressing video data, a process of high-efficiency audio encoding for compressing audio data at step 202, a process of insertion of additional data at step 203, a process of objectification for interactive service at step 204, a process of synchronization at step 210 for synchronizing media streams outputted from the processes of video encoding at the step 201, audio encoding at the step 202, additional data insertion at the step 203, and objectification for interactive service at the step 204, a process of multiplexing for mixing the synchronized media streams at step 220, and a process of encoding and interleaving for correcting an error to be occurred in the media stream multiplexed in the process of multiplexing and interleaving at step 230.

The DMB system transmits DMB data as follows.

First, at the steps 201 and 202, high-efficiency source encoding for compressing multimedia data is performed and, at the step 204, objectification for interactive service is performed. Then, at the step 210, video/audio/additional data streams are synchronized and, at step 220, the media streams are multiplexed.

Subsequently, at step 230, error correction encoding and interleaving are performed on the multiplexed stream in order to secure excellent reception quality in a high-speed mobile channel environment. The stream obtained by using the error correction encoding and the interleaving is transmitted to the DAB system and other digital broadcasting systems. Herein, the digital broadcasting systems include a digital television (TV) broadcasting system, a digital satellite broadcasting system, and a digital cable broadcasting system.

Meanwhile, if the DAB system and the digital broadcasting system show excellent system performance in a high-speed mobile channel environment, a DMB transmission scheme as shown in Fig. 2B which does not include the error correction encoding and interleaving of the step 230 can be applied.

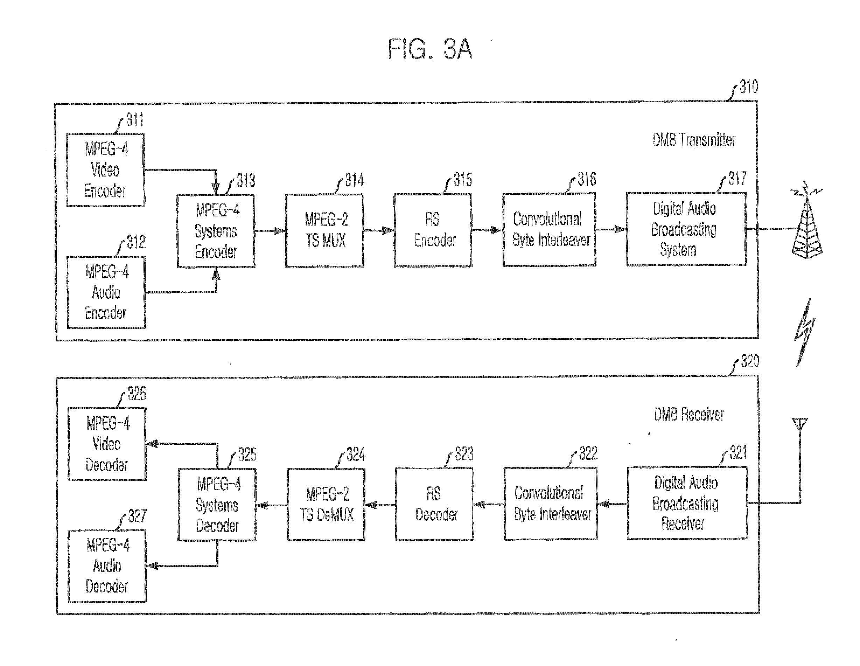

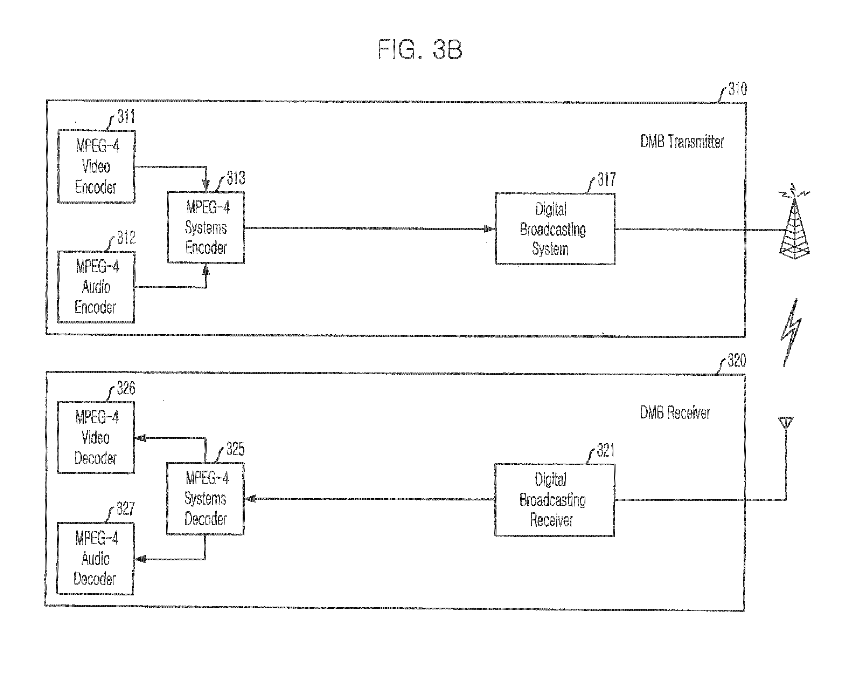

Figs. 3A and 3B are block diagrams illustrating a DMB system in accordance with an embodiment of the present invention. The drawings show system technologies applied to the DMB of Figs. 2A and 2B.

As shown in Fig. 3A, the DMB system of the present invention can be divided into a DMB transmitter 310 and a DMB receiver 320.

First, the DMB transmitter 310 uses an MPEG-4 audio encoder 311 and an MPEG-4 video encoder 312 for high-efficiency source encoding, and it uses an MPEG-4 systems encoder 313 for objectification and synchronization of media stream. It uses an MPEG-2 transport stream (TS) multiplexer 314 for multiplexing media stream, and it uses a Reed-Solomon (RS) encoder 315 for additional error correction encoding. The DMB transmitter 310 uses a convolutional byte interleaver 316 to remove temporal correlation between neighboring byte units in data stream. The finally outputted DMB media stream is inputted through a stream mode of a DAB transmission system 317 or data channels of the other digital broadcasting systems.

The DMB receiver 320 receives multimedia data, which are passed through a receiving channel of the DAB receiving system 321 or those of the other digital broadcasting systems, pass through the convolutional byte deinterleaver 322, the RS decoder 323, the MPEG-2 TS demultiplexer 324, the MPEG-4 systems decoder 325, the MPEG-4 video decoder 326, and the MPEG-4 audio decoder 327.

If the conventional digital broadcasting systems 317 and 321 show excellent system performance in the high-speed mobile channel environment, a DMB transmission scheme can be embodied without the multiplexing process and the error correction encoding and interleaving process, which is shown in Fig. 3B.

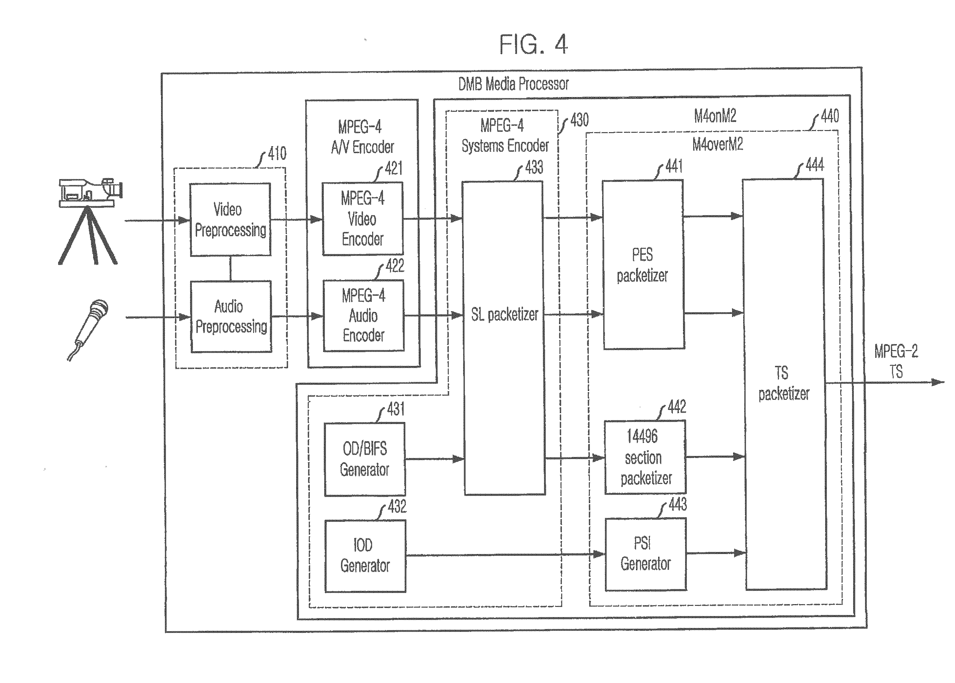

Fig. 4 is a block diagram showing a media processor of the DMB system in accordance with an embodiment of the present invention. It shows a structure of a DMB media processor that performs functions from compression to multiplexing of multimedia data. Herein, the media processor includes an MPEG-4 video/audio encoder, an MPEG-4 systems encoder, and an MPEG-2 TS multiplexer.

As shown in Fig. 4, the media processor of the DMB system of the present invention includes a preprocessor 410, an MPEG-4 encoder 421 and 422, an object descriptor (OD)/binary format for scene (BIFS) generator 431, an Initial Object Descriptor (IOD) generator 432, a sync layer (SL) packetizer 433, a Program Elementary Stream (PES) packetizer 441, a 14496 section packetizer 442, a PSI generator 443, a TS packetizer 444.

The preprocessor 410 converts an audio/video signal into a data stream of a desired format. The MPEG-4 encoder 421 and 422 compresses the data stream outputted from the preprocessor 410 into a high compressed media stream. The OD/BIFS generator 431 generates object descriptor (OD) and binary format for scene (BIFS). The IOD generator 432 generates the initial object descriptor (IOD). The sync layer packetizer 433 synchronizes media streams outputted from the MPEG-4 encoder 421 and 422 and the OD/BIFS generator 431. The PES packetizer 441 packetizes a packet outputted from the sync layer packetizer 433 into a PES packet. The 14496 section packetizer 442 packetizes a packet outputted from the sync layer packetizer 433 into a 14496 section. The PSI generator 443 generates Program Service Information (PSI) based on the data outputted from the IOD generator 432. The TS packetizer 444 packetizes a packet outputted from the PES packetizer 441, 14496 section packetizer 442, PSI generator 443 into transport stream.

That is, the media processor of the DMB system of the present invention includes an MPEG-4 systems encoder 430 and an M4overM2 module 440. The MPEG-4 systems encoder 430 includes the MPEG-4 audio/video encoder 421 and 422 for performing media compression efficiently after converting the audio/video multimedia source data into a data steam of a desired format in the preprocessor 410, the OD/BIFS generator 431 for interactive service, the IOD generator 432, the sync layer packetizer 433 for synchronizing the media streams, and the M4overM2 module 440 for generating a program elementary stream (PES) packet based on a sync layer packet and multiplexing the PES packet with a section packet and Program Service Information (PSI) into an MPEG-2 transport stream. Herein, the TS packetizer 444 can multiplex one or more audio/video/additional data based on a program.

As for the video encoder, an 'MPEG-4 Part 2' codec and an 'MPEG-4 Part 10 Advanced Video Coding (AVC)' codec can be used. For the audio encoder, diverse codecs such as an 'Advanced Audio Coding (AAC)' codec, an 'AAC+' codec, and a 'Bit Sliced Arithmetic Coding (BSAC)' codec can be used. The codec is selected in consideration of compression performance and trade-off in the complexity of embodiment.

Since the video codec supports 30 frame per second (fps) maximally and supports diverse display formats such as Quarter Common Intermediate Format (QCIF), Quicktime Video Graphics Array (QVGA), and Common Intermediate Format (CIF), it can be applied to diverse application fields. Also, since the audio codec can compress a stereo channel at a rate of less than 128 kbps, the compression efficiency is superior to the codecs used in the conventional broadcasting systems including DAB. Therefore, spectrum use efficiency can be maximized.

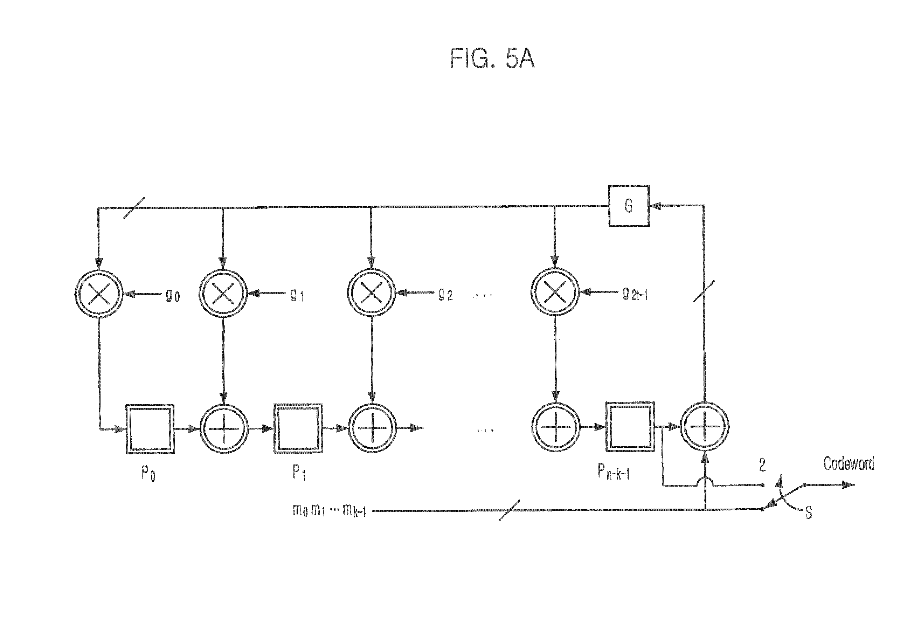

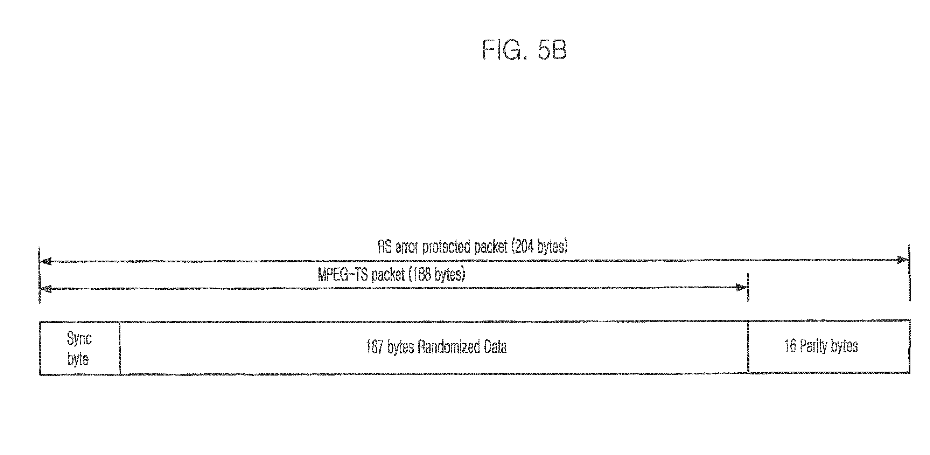

Fig. 5A shows an RS encoder of the DMB system in accordance with an embodiment of the present invention. They present a structure of the RS (204, 188, t=8) encoder for generating an RS code word which is used to satisfy the target Bit Error Rate (BER) of multimedia data and Fig. 5B shows a structure of a packet.

In case of a DAB system, a convolutional code is used as an error correcting code. If an RS code is added to the DAB system for DMB, the channel encoder of total DMB system has a structure of concatenated code. Thus, the RS code can be referred to as an outer coder.

The RS (204, 188, t=8) code is embodied by using an RS (255, 239, t=8) code, and the code generator polynomial is:

$$g(x) = (x + \lambda^0)(x + \lambda^1)(x + \lambda^2)\cdots(x + \lambda^{15}) \qquad \text{Eq. 1}$$

wherein $\lambda = 02_{HEX}$.

The following is a field generator polynomial:

$$p(x) = x^8 + x^4 + x^3 + x^2 + 1 \qquad \text{Eq. 2}$$

Meanwhile, the RS (204, 188, t=8) code is embodied as follows.

First, 51-byte '0' is added to 188-byte information data. Then, 239-byte information data are inputted to an RS (255, 239, t=8) encoder.

Subsequently, the added 51-byte '0' is removed from the encoded 255-byte output data to thereby form an RS-encoded packet as described in Fig. 5B.

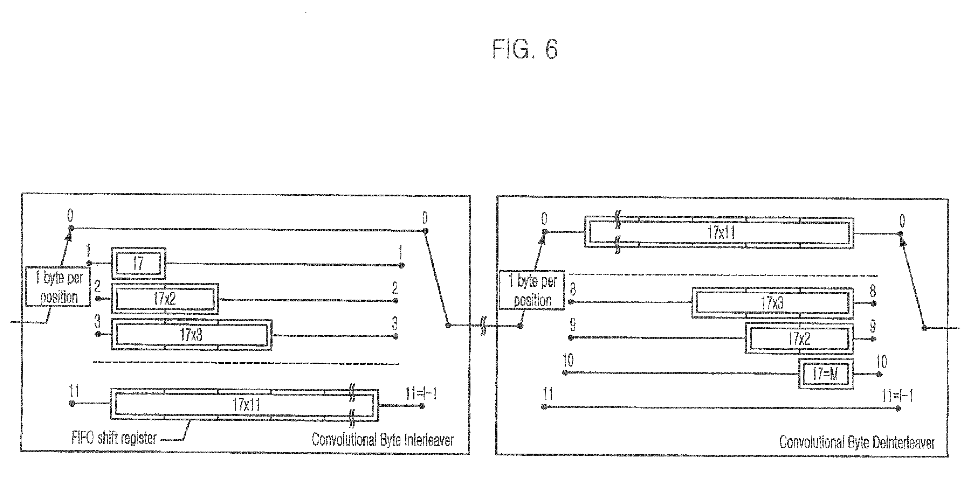

Fig. 6 is a schematic diagram describing an interleaver of the DMB system in accordance with an embodiment of the present invention.

In order to remove temporal correlation between adjacent byte units, the interleaver interleaves a 204 byte-based MPEG-2 TS packet, from which a synchronization word begins, by using a convolutional byte interleaver having a structure of Fig. 6.

The interleaver is formed of 12 branches and each branch is formed of a plurality of memories which are based on a unit of 17 byte $\times$ N (N=0, 1, 2, ..., 11). Input/output switches are synchronized with each other.

For synchronization, synchronization words are transmitted always through a '0' branch and the synchronization of a deinterleaver is obtained by allocating a first recognized synchronization word to a '0' branch of the deinterleaver.

An interleaved data stream is allocated to a stream mode of the DAB system and data channels for other digital broadcasting systems and then processed.

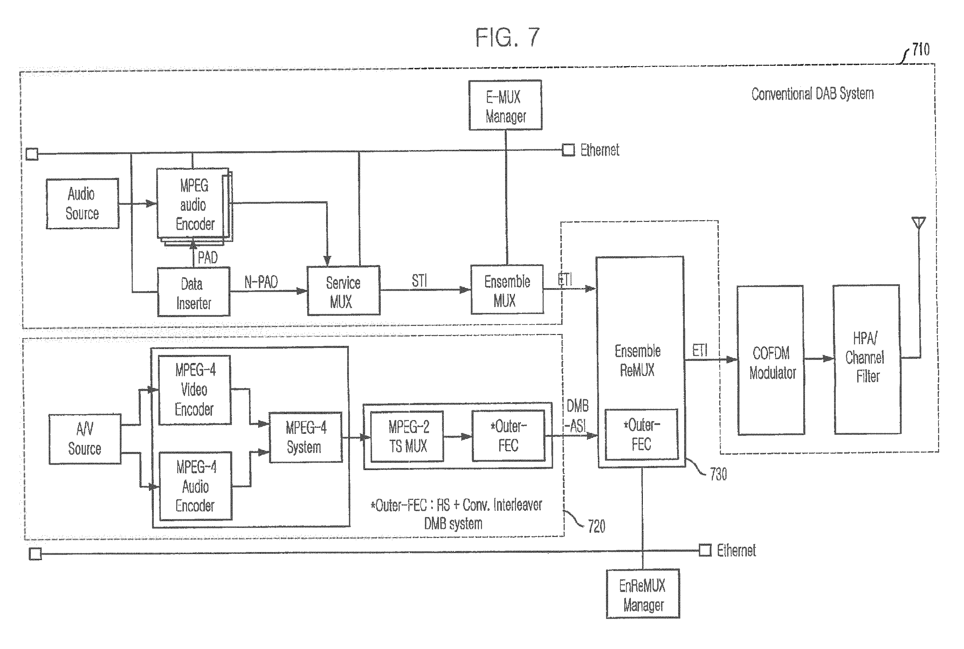

Hereafter, a method and apparatus for cooperating the DMB system of the present invention and the conventional DAB system will be described with reference to Figs. 7 to 10.

Fig. 7 is a block diagram describing an apparatus for cooperating the DMB system and the conventional DAB system in accordance with an embodiment of the present invention.

In the drawing, the reference numeral '710' denotes the conventional DAB system; the reference numeral '720' denotes the DMB system of the present invention; and the reference numeral '730' denotes an ensemble remultiplexer, individually.

The ensemble remultiplexer 730 creates a new Ensemble Transport Interface (ETI) frame by remultiplexing the ETI frame inputted from the DAB system 710 with a DMB media stream and transmits the newly formed ETI frame to a Coded Orthogonal Frequency Division Multiplexing (COFDM) modulator of the DAB system 710. Herein, the ensemble remultiplexer 730 performs only the aforementioned remultiplexing function, or includes the functions of the RS encoder and the interleaver additionally, or includes all the functions of the RS encoder, the interleaver, and the DMB media processor. The system with the above-described structure makes it possible to use the conventional DAB transmission system 710, regardless of the structure, which is different according to manufacturing companies.

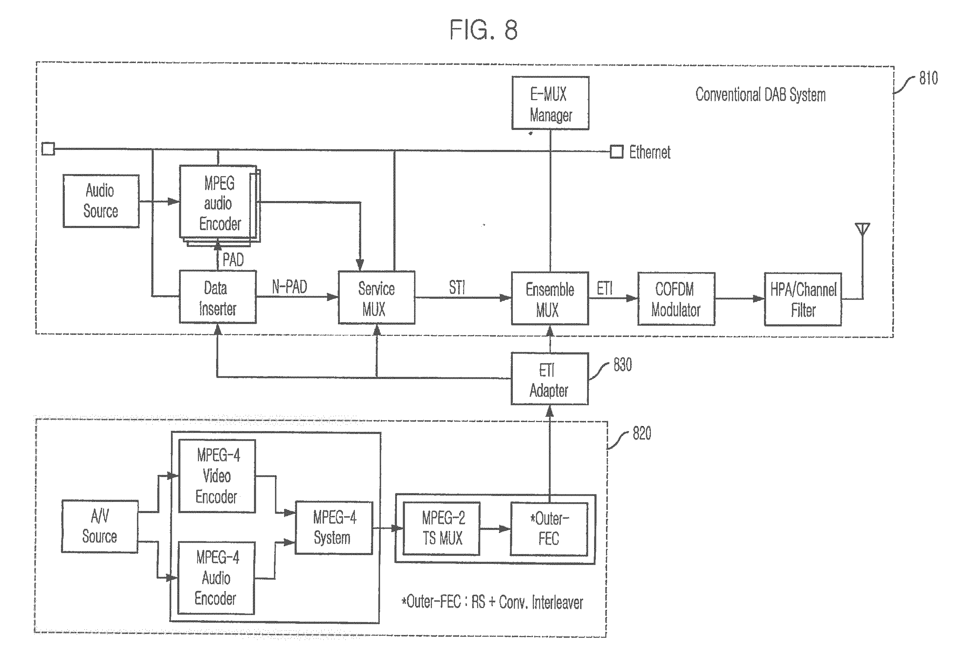

Fig. 8 is a block diagram describing an apparatus for connecting the DMB system and the conventional DAB system in accordance with another embodiment of the present invention.

In the drawing, the reference numeral '810' denotes the conventional DAB system; the reference numeral '820' denotes the DMB system of the present invention; and the reference numeral '830' denotes an ETI adapter, individually.

The ETI adaptor 830 receives media stream from one or more DMB system 820, converts it into an ETI frame, and outputs the ETI frame to any one among the ensemble multiplexer, the service multiplexer, and data inserter of the DAB system 810.

If the device in connection is the ensemble multiplexer, it receives the ETI output of the ETI adapter 830 and the Service Transport Interface (STI) output of the service multiplexer, forms a new ETI frame and transmits it to the COFDM modulator.

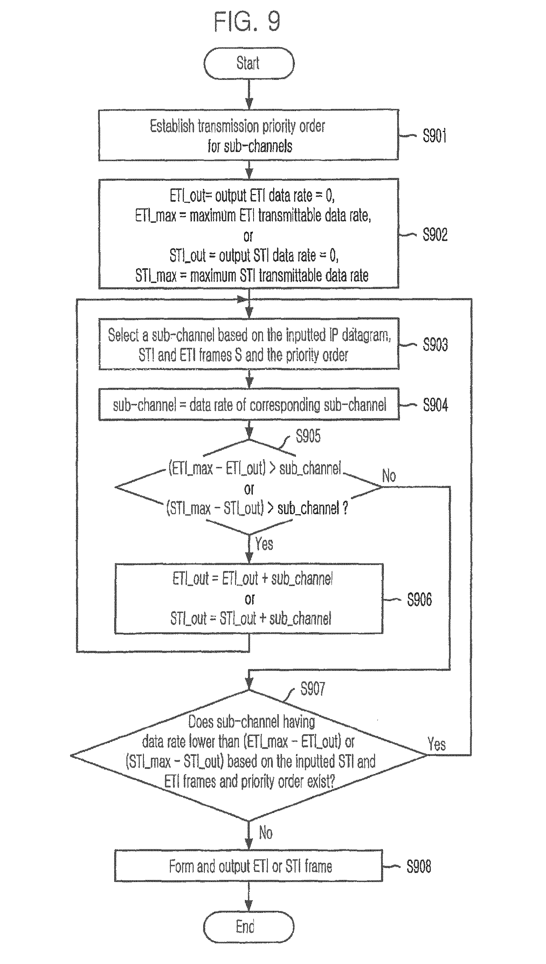

The ensemble multiplexer analyzes the content of the inputted STI and ETI frames and forms a new ETI frame automatically based on a priority order defined by an administrator. This will be described more in detail with reference to Fig. 9.

Fig. 9 is a flowchart describing an ETI frame formatting method in accordance with an embodiment of the present invention. In the flowchart, the ensemble multiplexer/service multiplexer/data inserter maintains maximum data transmission capacity and forms a new ETI frame and a new STI frame automatically.

First, the administrator of the ensemble multiplexer establishes a transmission priority order for a sub-channel to automatically form the new STI and ETI frame. Then, a sub-channel based on the STI and ETI frames is selected according to the above established sub-channel priority order and it is determined whether the transmission of the selected sub-channel is possible.

If it is determined that transmission is impossible, a sub-channel having a data size that can be included in the remaining space of the STI or ETI frame is searched and the process of including it into the frame is repeated in order to minimize the remaining space of the STI or ETI frame to be outputted.

This can be described more in detail below.

First, at step S901, transmission priority order for a sub-channel is established to automatically form a new STI frame or a new ETI frame. Then, at step S902, it is established that "ETI_out= output ETI data rate = 0," "ETI_max = maximum ETI transmittable data rate," or "STI_out = output STI data rate = 0," "STI_max = maximum STI transmittable data rate."

Subsequently, at step S903, a sub-channel is selected based on the inputted IP datagram, the STI and ETI frames and the priority order. Then, at step S904, it is established that "sub_channel = data rate of a corresponding sub-channel."

Subsequently, at step S905, it is determined whether "(ETI_max - ETI_out) > sub_channel" or "(STI_max - STI_out) > sub_channel" is satisfied.

If the above condition is satisfied, at step S906, it is established that "ETI_out - ETI_out + sub_channel" or "STI_out = STI_out + sub_channel" and then logic flow goes to the step S903 where a sub-channel is selected according to priority order.

If the above condition is not satisfied, a step S907, it is determined whether there is a sub-channel having a data rate lower than "(ETI_max - ETI_out)" or "(STI_max - STI_out)" based on the inputted STI and ETI frames and the priority order. If there is the sub-channel, the logic flow goes to the step S903 where a sub-channel is selected according to the priority order. If there is no such sub-channel, at step S908, a process of forming and outputting ETI or STI frames is performed.

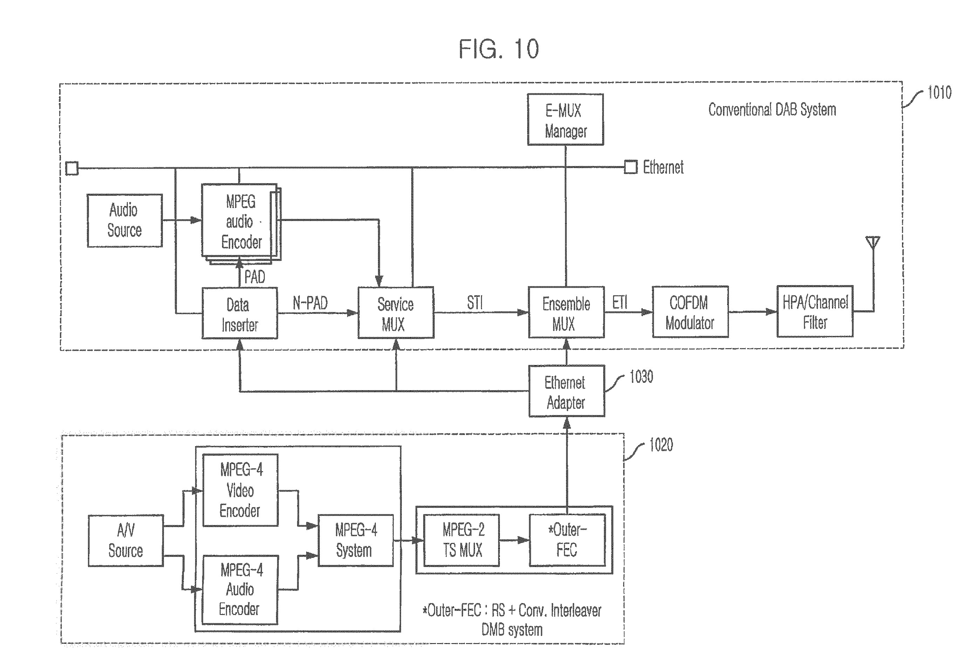

Fig. 10 is a block diagram illustrating an apparatus for cooperating the DMB system and the conventional DAB system in accordance with another embodiment of the present invention. It presents a method of cooperating the DMB system with the conventional DAB system by using an Ethernet adapter.

In the drawing, the reference numeral '1010' denotes the conventional DAB system; the reference numeral '1020' denotes the DMB system of the present invention; and the reference numeral '1030' denotes an Ethernet adapter, individually.

According to the proposed method, a DMB media stream is transformed into an Internet Protocol (IP) datagram and transmitted in the form of a stream mode of the DAB system 1010. The Ethernet adapter 1030 outputs the IP datagram to one of the ensemble multiplexer, service multiplexer and data inserter. The one of the ensemble multiplexer, service multiplexer and data inserter that receives the IP diagram forms new ETI and STI frames based on the method of Fig. 9.

As described above, the present invention transmits and receives multimedia data efficiently and stably based on the DAB system and other diverse digital broadcasting systems. The present invention provides diverse interactive broadcasting service having an excellent reception performance without breaks by compressing video and multimedia data efficiently, supporting an interactive service through interaction and synchronization between objects by processing the video and multimedia data on an object basis, multiplexing video/audio/additional data stably, endowing robustness against multipath fading and the Doppler effect that occur in a mobile channel environment by using an additional error correcting method.

The method of the present invention can be embodied as a program and stored in a computer-readable recording medium such as CD-ROM, RAM, ROM, floppy disks, hard disks, and magneto-optical disks.

As described above, the present invention can provide an interactive multimedia data service by using the conventional DAB system and other diverse digital broadcasting systems and it can transmit multimedia data of diverse formats such as mobile TV, Differential Global Positioning System (DGPS), Location Based Service (LBS), Pay Per View (PPV), traffic information, stock information, weather forecast and the like.

Also, the present invention can maximizes the spectrum use efficiency by using highly efficient multimedia data compression technology and it can embody a multimedia data service efficiently by adding a DMB processing module to the conventional DAB and other diverse digital broadcasting systems.

The present application contains subject matter related to Korean patent application No. 2003-57531, filed in the Korean Intellectual Property Office on August 20, 2003, the entire contents of which is incorporated herein by reference.

While the present invention has been described with respect to certain preferred embodiments, it will be apparent to those skilled in the art that various changes and modifications may be made without departing from the scope of the invention as defined in the following claims.

**Claims**

1. A digital multimedia broadcasting system, comprising:

   an encoding means for encoding inputted audio/video signals;
   a system encoding means for objectifying data for an interactive service and synchronizing a media stream which is outputted from the encoding means, a media stream of additional data and a media stream which is generated by objectifying the data for the interactive service;
   a multiplexing means for multiplexing the media streams outputted from the system encoding means;
   an error correction encoding means for performing additional error correction encoding onto a media stream outputted from the multiplexing means;
   an interleaving means for removing temporal correlation between adjacent byte units within a media stream outputted from the error correction encoding means; and
   a transmitting means for transmitting a digital multimedia broadcasting media stream outputted from the interleaving means,
   wherein the transmitting means is one of a digital audio broadcasting system, a digital television (TV) broadcasting system, a digital satellite broadcasting system, and a digital cable broadcasting system.

2. The system as recited in Claim 1, wherein the audio/video signals are obtained by converting multimedia source data into data stream of a predetermined format through a preprocessing.

3. The system as recited in Claim 1, wherein the encoding means converts the inputted video signal into a format of 'Moving Picture Experts Group (MPEG)-4 Part 2' or a format of 'MPEG-4 Part 10', which is Advanced Video Coding (AVC).

**4.** The system as recited in Claim 1, wherein the encoding means converts the inputted audio signal into one of formats of 'Advanced Audio Coding (AAC)', 'Advanced Audio Coding Plus (AAC+)', and 'Bit Sliced Arithmetic Coding (BSAC)'.

**5.** The system as recited in Claim 1, wherein the system encoding means includes:

an Object Descriptor (OD)/Binary Format for Scene (BIFS) generating means for generating OD/BIFS for the interactive service;
an Initial Object Descriptor (IOD) generating means for generating an IOD; and
a sync layer packetizing means for synchronizing media streams outputted from the encoding means and the OD/BIFS generating means.

**6.** The system as recited in Claim 5, wherein the multiplexing means includes:

a PES packetizing means for generating a Program Elementary Stream (PES) packet based on a packet which is generated in the sync layer packetizing means based on the media stream outputted from the encoding means;
a section packetizing means for generating sections based on a data which is outputted from the IOD generating means and a packet which is generated in the sync layer packetizing means based on a OD/BIFS stream, wherein the OD/BIFS stream is outputted from the OD/BIFS generating means; and
a transport stream (TS) packetizing means for packetizing data outputted from the PES packetizing means and the section packetizing means into transport stream.

**7.** The system as recited in Claim 6, wherein the section packetizing means includes:

a 14496 section packetizing means for generating 14496 section based on the packet which is generated in the sync layer packetizing means based on the OD/BIFS stream; and
a Program Service Information (PSI) generating means for generating PSI based on the data outputted from the IOD generating means.

**8.** The system as recited in Claim 1, wherein the error correction encoding means is a Reed-Solomon (RS) encoder.

**9.** The system as recited in Claim 1, wherein the interleaving means is composed of 12 branches and the branches individually include a plurality of memories having a 17bytes x N unit where N=0, 1, 2,..., 11, and input/output switches operating in synchronization with each other; sync words are transmitted always through a '0' branch for synchronization; and synchronization of a deinterleaver is acquired by allocating the first recognized sync word to the '0' branch of the deinterleaver.

**10.** The system as recited in Claim 1, further comprising
an Ensemble Transport Interface (ETI) converting means for converting the digital multimedia broadcasting media stream outputted from the interleaving means into an ETI frame and delivering the ETI frame to the transmitting means.

**11.** The system as recited in Claim 1, further comprising
an Internet Protocol (IP) datagram converting means for converting the digital multimedia broadcasting media stream outputted from the interleaving means into an IP datagram and delivering the IP datagram to the transmitting means.

**12.** A digital multimedia broadcasting system, comprising:

a receiving means for receiving digital multimedia broadcasting media stream;
a deinterleaving means for deinterleaving the received digital multimedia broadcasting media stream which is interleaved to remove temporal correlation in adjacent byte units;
an error correction decoding means for performing additional error correction decoding onto the deinterleaved digital multimedia broadcasting media stream which is generated from additional error correction encoding;
a demultiplexing means for demultiplexing the additional error correction decoded digital multimedia broadcasting media stream which is multiplexed;
a system decoding means for decoding the demultiplexed digital multimedia broadcasting media stream to produce media stream, additional data, and data objectified for an interactive service; and
a decoding means for decoding the media stream into audio/video signals,
wherein the receiving means is one of a digital audio broadcasting system, a digital television (TV) broadcasting system, a digital satellite broadcasting system, and a digital cable broadcasting system.

13. The system as recited in Claim 12, wherein the decoding means decodes a video signal included in the media stream based on 'Moving Picture Experts Group (MPEG)-4 Part 2' or 'MPEG-4 Part 10' which is Advanced Video Coding (AVC).

14. The system as recited in Claim 12, wherein the decoding means decodes an audio signal included in the media stream based on one of 'Advanced Audio Coding (AAC)', 'Advanced Audio Coding Plus (AAC+)', and 'Bit Sliced Arithmetic Coding (BSAC)'.

15. The system as recited in Claim 12, wherein the error correction decoding means is a Reed-Solomon (RS) decoder.

16. A digital multimedia broadcasting method, comprising the steps of:

a) encoding inputted audio/video signals;
b) objectifying data for an interactive service and synchronizing a media stream which is outputted from the step a), a media stream of additional data and a media stream which is generated by objectifying the data for the interactive service;
c) multiplexing the media streams outputted from the step b);
d) performing additional error correction encoding onto a media stream outputted from the step c);
e) performing interleaving to remove temporal correlation between adjacent byte units within a media stream outputted from the step d); and
f) transmitting a digital multimedia broadcasting media stream outputted from the step e),

wherein the step f) is performed by using one of a digital audio broadcasting system, a digital television (TV) broadcasting system, a digital satellite broadcasting system, and a digital cable broadcasting system.

17. The method as recited in Claim 16, wherein the audio/video signals are obtained by converting multimedia source data into data stream of a predetermined format through a preprocessing.

18. The method as recited in Claim 16, wherein the step a) converts the inputted video signal into a format of 'Moving Picture Experts Group (MPEG)-4 Part 2' or a format of 'MPEG-4 Part 10', which is Advanced Video Coding (AVC).

19. The method as recited in Claim 16, wherein the step a) converts the inputted audio signal into one of formats of 'Advanced Audio Coding (AAC)', 'Advanced Audio Coding Plus (AAC+)', and 'Bit Sliced Arithmetic Coding (BSAC)'.

20. The method as recited in Claim 16, wherein the step b) includes the steps of:

b1) generating an Object Descriptor (OD)/ Binary Format for Scene (BIFS) for the interactive service;
b2) generating an Initial Object Descriptor (IOD); and
b3) performing a sync layer packetization to synchronize media streams outputted from the step a) and the step b1).

21. The method as recited in Claim 20, wherein the step c) includes the steps of:

c1) generating a Program Elementary Stream (PES) packet based on a packet which is generated in the step b3) based on the media stream outputted from the step a);
c2) generating sections based on a data which is outputted from the step b2) and a packet which is generated in the step b3) based on a OD/BIFS stream, wherein the OD/BIFS stream is outputted from the step b1); and
c3) packetizing data outputted from the step c1) and the step c2) into transport stream.

22. The method as recited in Claim 21, wherein the step c2) includes the steps of:

c21) generating 14496 section based on the packet which is generated in the step b3) based on the OD/BIFS stream; and
c22) generating PSI based on the data outputted from the step b2).

23. The method as recited in Claim 16, wherein the step d) is performed in a Reed-Solomon (RS) encoder.

24. The method as recited in Claim 16, wherein the step e) is performed in an interleaving means which is composed of 12 branches and the branches individually include a plurality of memories having a 17bytes x N unit where N=0, 1, 2,..., 11, and input/output switches operating in synchronization with each other; sync words are transmitted always through a '0' branch for synchronization; and synchronization of a deinterleaver is acquired by allocating the first recognized sync word to the '0' branch of the deinterleaver.

25. The method as recited in Claim 16, further comprising the step of:

   g) converting the digital multimedia broadcasting media stream outputted from the step e) into an ETI frame and delivering the ETI frame to the step f).

26. The method as recited in Claim 16, further comprising the step of:

   h) converting the digital multimedia broadcasting media stream outputted from the step e) into an IP datagram and delivering the IP datagram to the step f).

27. A digital multimedia broadcasting method, comprising the steps of:

   a) receiving digital multimedia broadcasting media stream;
   b) deinterleaving the received digital multimedia broadcasting media stream which is interleaved to remove temporal correlation in adjacent byte units;
   c) performing additional error correction decoding onto the deinterleaved digital multimedia broadcasting media stream which is generated from additional error correction encoding;
   d) demultiplexing the additional error correction decoded digital multimedia broadcasting media stream which is multiplexed;
   e) decoding the demultiplexed digital multimedia broadcasting media stream to produce media stream, additional data, and data objectified for an interactive service; and
   f) decoding the media stream into audio/video signals, wherein the step a) is performed by using one of a digital audio broadcasting system, a digital television (TV) broadcasting system, a digital satellite broadcasting system, and a digital cable broadcasting system.

28. The method as recited in Claim 27, wherein the step f) decodes the video signal included in the media stream based on 'Moving Picture Experts Group (MPEG)-4 Part 2' or 'MPEG-4 Part 10' which is Advanced Video Coding (AVC).

29. The method as recited in Claim 27, wherein the step f) decodes the audio signal included in the media stream based on one of 'Advanced Audio Coding (AAC)', 'Advanced Audio Coding Plus (AAC+)', and 'Bit Sliced Arithmetic Coding (BSAC)'.

30. The method as recited in Claim 27, wherein the step c) is performed in a Reed-Solomon (RS) decoder.

FIG. 1

FIG. 2A

| | | | |
|---|---|---|---|
| ⌐201 | ⌐202 | ⌐203 | ⌐204 |
| Video encoding | Audio encoding | Insertion of additional data | Data objectification for interactive service |

⌐210

Synchronization of media streams

⌐220

Multiplexing of media streams

⌐230

Error correction encoding and interleaving

⌐240

Digital broadcasting system

FIG. 2B

```
  ┌─201          ┌─202          ┌─203          ┌─204
┌──────────┐  ┌──────────┐  ┌──────────────┐  ┌──────────────────────┐
│  Video   │  │  Audio   │  │ Insertion of │  │ Data objectification for │
│ encoding │  │ encoding │  │additional data│  │  interactive service  │
└──────────┘  └──────────┘  └──────────────┘  └──────────────────────┘
      │             │              │                     │        ┌─210
      ▼             ▼              ▼                     ▼
┌──────────────────────────────────────────────────────────────────┐
│                 Synchronization of media streams                   │
└──────────────────────────────────────────────────────────────────┘
                               │                          ┌─220
                               ▼
┌──────────────────────────────────────────────────────────────────┐
│                   Multiplexing of media streams                    │
└──────────────────────────────────────────────────────────────────┘
                               │                          ┌─240
                               ▼
┌──────────────────────────────────────────────────────────────────┐
│                    Digital broadcasting system                     │
└──────────────────────────────────────────────────────────────────┘
```

## FIG. 3A

DMB Transmitter — 310

- MPEG-4 Video Encoder (311)
- MPEG-4 Audio Encoder (312)
- MPEG-4 Systems Encoder (313)
- MPEG-2 TS MUX (314)
- RS Encoder (315)
- Convolutional Byte Interleaver (316)
- Digital Audio Broadcasting System (317)

DMB Receiver — 320

- MPEG-4 Video Decoder (326)
- MPEG-4 Audio Decoder (327)
- MPEG-4 Systems Decoder (325)
- MPEG-2 TS DeMUX (324)
- RS Decoder (323)
- Convolutional Byte Interleaver (322)
- Digital Audio Broadcasting Receiver (321)

EP 2 934 003 A1

## FIG. 3B

EP 2 934 003 A1

FIG. 4

FIG. 5A

FIG. 5B

RS error protected packet (204 bytes)

MPEG-TS packet (188 bytes)

| Sync byte | 187 bytes Randomized Data | 16 Parity bytes |
| --- | --- | --- |

EP 2 934 003 A1

FIG. 6

## FIG. 7

710

Conventional DAB System

E-MUX Manager

Ethernet

Audio Source → MPEG audio Encoder

PAD

Data Inserter → N-PAD → Service MUX → STI → Ensemble MUX → ETI

Ensemble ReMUX → ETI → COFDM Modulator → HPA/ Channel Filter

*Outer-FEC

730

A/V Source → MPEG-4 Video Encoder

MPEG-4 Audio Encoder

MPEG-4 System → MPEG-2 TS MUX → *Outer-FEC → DMB -ASI

*Outer-FEC : RS + Conv. Interleaver
DMB system

720

Ethernet

EnReMUX Manager

EP 2 934 003 A1

# FIG. 8

EP 2 934 003 A1

## FIG. 9

```
                        ┌──────────┐
                        │  Start   │
                        └────┬─────┘
                             │
                             ▼
        ┌─────────────────────────────────────┐
        │   Establish transmission priority order    │ ─── S901
        │          for sub-channels            │
        └─────────────────┬───────────────────┘
                          │
                          ▼
        ┌─────────────────────────────────────┐
        │  ETI_out= output ETI data rate = 0,  │
        │  ETI_max = maximum ETI transmittable data rate,  │ ─── S902
        │                  or                  │
        │  STI_out = output STI data rate = 0, │
        │  STI_max = maximum STI transmittable data rate │
        └─────────────────┬───────────────────┘
                          │
                          ▼
        ┌─────────────────────────────────────┐
        │  Select a sub-channel based on the inputted IP datagram,  │ ─── S903
        │   STI and ETI frames S and the priority order  │
        └─────────────────┬───────────────────┘
                          │
                          ▼
        ┌─────────────────────────────────────┐
        │  sub-channel = data rate of corresponding sub-channel  │ ─── S904
        └─────────────────┬───────────────────┘
                          │
                          ▼
                    S905
         ◇  (ETI_max – ETI_out) > sub_channel     No
         ◇            or                    ────────
         ◇  (STI_max – STI_out) > sub_channel ?
                    │ Yes
                    ▼
        ┌─────────────────────────────────────┐
        │   ETI_out = ETI_out + sub_channel    │
        │                  or                  │ ─── S906
        │   STI_out = STI_out + sub_channel    │
        └─────────────────┬───────────────────┘
                          │
                          ▼
                    S907
         ◇  Does sub-channel having
         ◇  data rate lower than (ETI_max – ETI_out) or      Yes
         ◇  (STI_max – STI_out) based on the inputted STI and  ──────
         ◇  ETI frames and priority order exist?
                    │ No
                    ▼
        ┌─────────────────────────────────────┐
        │     Form and output ETI or STI frame │ ─── S908
        └─────────────────┬───────────────────┘
                          │
                          ▼
                     ┌────────┐
                     │  End   │
                     └────────┘
```

FIG. 10

EP 2 934 003 A1

Europäisches
Patentamt

European
Patent Office

Office européen
des brevets

# EUROPEAN SEARCH REPORT

Application Number

EP 15 16 7067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GRUBE M ET AL: "Applications of MPEG-4: digital multimedia broadcasting", INTERNATIONAL CONFERENCE ON CONSUMER ELECTRONICS. 2001 DIGEST OF TECHNICAL PAPERS. ICCE. LOS ANGELES, CA, JUNE 19 - 21, 2001; [INTERNATIONAL CONFERENCE ON CONSUMER ELECTRONICS], NEW YORK, NY : IEEE, US, 19 June 2001 (2001-06-19), pages 136-137, XP010552101, ISBN: 978-0-7803-6622-0 * the whole document * | 1-30 | INV. H04N7/173 |
| X | BAUER S ET AL: "MPEG-4 Main Profile und seine Anwendung für die Videoübertragung über DAB/DMB", ITG FACHBERICHTE; MULTIMEDIA: ANWENDUNGEN, TECHNOLOGIE, SYSTEME, VDE VERLAG, BERLIN, DE; DORTMUND, GERMANY, no. 144, 1 January 1997 (1997-01-01), pages 281-286, XP008115742, ISSN: 0341-0196 * the whole document * | 1-30 | |
| X | FAZEL K ET AL: "MOBILE MULTIMEDIA SERVICES VIA DAB: DMB", IEEE GLOBAL TELECOMMUNICATIONS CONFERENCE. PHOENIX, ARIZONA, NOV. 3 - 8, 1997; [GLOBAL TELECOMMUNICATIONS CONFERENCE (GLOBECOM)], NEW YORK, IEEE, US, 3 November 1997 (1997-11-03), pages 1312-1317, XP000737741, ISBN: 978-0-7803-4199-9 * the whole document * | 1-30 | TECHNICAL FIELDS SEARCHED (IPC) H04N |

-/--

The present search report has been drawn up for all claims

| Place of search | Date of completion of the search | Examiner |
|---|---|---|
| Berlin | 24 August 2015 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 15 16 7067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAUER S ET AL: "Video transmission over DAB/DMB as an application for the MPEG-4 main profile", NTG FACHBERICHTE; PICTURE CODING SYMPOSIUM. PCS 97, VDE VERLAG, BERLIN, DE; BERLIN, GERMANY, no. 143, 1 January 1997 (1997-01-01), pages 111-116, XP008115741, ISSN: 0341-0196 * abstract * * page 111, right-hand column, line 1 - page 115, left-hand column, line 5 * | 1-30 | |
| X | GRUBE M ET AL: "Applications of MPEG-4: Digital Multimedia Broadcasting", IEEE TRANSACTIONS ON CONSUMER ELECTRONICS, IEEE SERVICE CENTER, NEW YORK, NY, US, vol. 47, no. 3, 19 June 2001 (2001-06-19), pages 474-484, XP002389300, * abstract * * sections 2, 3 * | 1-30 | |
| A | ALEXANDROS ELEFTHERIADIS: "MPEG-4 systems systems", PROCEEDINGS OF THE SPIE - THE INTERNATIONAL SOCIETY FOR OPTICAL ENGINEERING, SPIE, US, vol. 4209, 1 March 2001 (2001-03-01), pages 1-12, XP002389301, ISSN: 0277-786X * abstract * * sections 2-4 * | 1,3-7, 12-14, 16, 18-22, 27-29 | |

TECHNICAL FIELDS
SEARCHED (IPC)

-/--

The present search report has been drawn up for all claims

| Place of search | Date of completion of the search | Examiner |
|---|---|---|
| Berlin | 24 August 2015 | Kontopodis, D |

EPO FORM 1503 03.82 (P04C01)

Europäisches
Patentamt

European
Patent Office

Office européen
des brevets

# EUROPEAN SEARCH REPORT

Application Number

EP 15 16 7067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Text of ISO/IEC 13818-1/PDAM7", JOINT VIDEO TEAM (JVT) OF ISO/IEC MPEG & ITU-T VCEG(ISO/IEC JTC1/SC29/WG11 AND ITU-T SG16 Q6), XX, XX, no. N2664, 13 April 1999 (1999-04-13), XP030010972, * section P.2.3 * | 5-7, 20-22 | |
| A | "Digital Video Broadcasting (DVB); Framing structure, channel coding and modulation for digital Terrestrial television (DVB-T); ETS 300 744", ETSI STANDARDS, LIS, SOPHIA ANTIPOLIS CEDEX, FRANCE, vol. BC, 1 March 1997 (1997-03-01), XP014014379, * paragraph [4.3.2] * | 8,9,15, 23,24,30 | |
| A | AVARO O ET AL: "MPEG-4 SYSTEMS: OVERVIEW", SIGNAL PROCESSING. IMAGE COMMUNICATION, ELSEVIER SCIENCE PUBLISHERS, AMSTERDAM, NL, vol. 15, 1 January 2000 (2000-01-01), pages 281-298, XP000934131, ISSN: 0923-5965 * abstract * * sections 3 and 4 * | 1,3,4, 12-14, 16,18, 19,27-29 | TECHNICAL FIELDS SEARCHED (IPC) |

The present search report has been drawn up for all claims

| Place of search | Date of completion of the search | Examiner |
|---|---|---|
| Berlin | 24 August 2015 | Kontopodis, D |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ........................................................................

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200357531